# FASCICULE DE BREVET EUROPEEN

(11) **EP 3 771 854 B1**
(45) Date de publication et mention de la délivrance du brevet: **07.09.2022**
(21) Numéro de dépôt: 20187141.5
(22) Date de dépôt: 22.07.2020
(51) Int. Cl.: F16L 3/13, F16L 3/227

(54) **DISPOSITIF DE FIXATION D'AU MOINS UN TUBE CONTRE UNE PAROI**
VORRICHTUNG ZUM BEFESTIGEN MINDESTENS EINES ROHRS AN EINER WAND
DEVICE FOR ATTACHING AT LEAST ONE TUBE TO A WALL

(30) Priorité: 01.08.2019 FR 1908803
(43) Date de publication de la demande: 03.02.2021
(73) Titulaire: François Inglese, 43000 Le Puy (FR)
(72) Inventeur: INGLESE, François, 43120 MONISTROL SUR LOIRE (FR)
(74) Mandataire: Cabinet Laurent & Charras

(56) Documents cités:
- EP-A1- 1 231 422
- EP-A1- 1 850 045
- EP-A2- 1 450 089
- FR-A1- 2 668 572
- US-A- 5 765 787
- US-A1- 2016 319 960

## Description

### Domaine technique

L'invention concerne le domaine de la fourniture de matériel pour les plombiers, électriciens, ou autres artisans, nécessitant de fixer au moins un tube ou gaine contre une paroi, par exemple au sol, contre un mur ou au plafond.

L'invention concerne plus particulièrement un dispositif de fixation d'au moins tube contre une paroi.

### Etat de la technique antérieure

Dans l'état de la technique, il est connu, pour fixer un tube contre une paroi, d'utiliser un dispositif sous la forme d'un moyen d'encliquetage présentant deux branches élastiques définissant une forme annulaire ouverte vers le haut, et prolongées entre elles et vers le bas par une cheville d'ancrage dans la paroi.

La cheville est creuse et débouche entre les branches élastiques pour recevoir une vis de fixation.

De ce qui précède, pour fixer des tubes contre une paroi, l'ensemble des dispositifs de fixation doivent préalablement être fixés contre la paroi, au moyen de vis de fixation, et ensuite les tubes doivent être encliquetés un par un.

L'inconvénient de cet état de la technique est qu'il nécessite l'utilisation d'un nombre très important de dispositifs de fixation, et de vis de fixation. Par ailleurs, ce dispositif correspond à un seul diamètre de tube ou gaine.

Il est également connu utiliser un dispositif de fixation sous la forme d'un crochet orienté vers le bas, et prolongé par une cheville d'ancrage dans la paroi.

Pour fixer des tubes contre une paroi, l'artisan doit préalablement couper les longueurs nécessaires des tubes, pour les fixer ensuite une par une contre la paroi.

En pratique, l'artisan coupe des longueurs plus importantes que celles nécessaires pour être sûr d'avoir une longueur suffisante pour se connecter à l'élément de raccordement, par exemple du type collecteur, nourrisse, etc.

Par ailleurs, l'artisan fixe les tubes un par un, en maintenant chaque tube au moyen d'une pluralité de crochets répartis sur la longueur du tube. Les crochets sont ancrés dans la paroi simultannément à la fixation des tubes.

L'inconvénient de cet état de la technique et qu'il nécessite l'utilisation d'un nombre important de dispositifs de fixation, et qu'une fois fixée contre la paroi, les tubes ne peuvent pas être retirés. Par ailleurs, un autre inconvénient réside dans le fait que des longueurs trop importantes de tube sont découpées, générant des chutes et donc une perte de matières. Enfin, la fixation est complexe car le tube doit être maintenu en même temps que le dispositif est ancré dans la paroi.

Il est également connu le document EP1850045 qui décrit un dispositif selon le préambule de la revendication 1.

### Exposé de l'invention

Le problème technique de l'invention est de remédier les inconvénients de l'art antérieur et, notamment, de fournir un dispositif de fixation d'au moins un tube contre une paroi, facile à mettre en place, tout en permettant d'encliqueter et de désencliqueter le tube après ancrage de la cheville dans la paroi.

Un autre objectif de l'invention est de fournir un tel dispositif qui permet de diminuer le temps de fixation des tubes, tout en permettant de couper les tubes aux longueurs strictement nécessaires.

À cet effet, il a été mis au point un dispositif de fixation d'au moins un tube contre une paroi, remarquable en ce qu'il comprend :
- un support plan ;
- une cheville d'ancrage dans la paroi, s'étendant orthogonalement d'une face inférieure du support ;
- un plot de frappe s'étendant orthogonalement d'une face supérieure du support, en alignement avec la cheville ;
- au moins un moyen d'encliquetage d'un tube, le moyen d'encliquetage s'étendant de la face supérieure du support et étant ouvert selon une orientation permettant l'encliquetage et le désencliquetage du tube après ancrage de la cheville dans la paroi.

De cette manière, le dispositif selon l'invention est fixé à une paroi d'une manière simple et rapide, par exemple avec un marteau frappant sur le plot afin d'ancrer la cheville dans un orifice ménagé dans la paroi.

La configuration ouverte du moyen d'encliquetage pour permettre l'encliquetage et le désencliquetage du tube après ancrage de la cheville dans la paroi est avantageuse puisqu'elle permet de venir fixer le tube après fixation du dispositif contre la paroi, et de pouvoir le retirer si besoin.

La configuration du moyen d'encliquetage, positionné sur un support plan à proximité du plot de frappe, permet de garantir une stabilité optimale du moyen d'encliquetage, de sorte qu'il est possible d'effectuer une pression sur le tube pour l'encliqueter, d'une manière optimale sans risquer de desceller la cheville d'ancrage ou de casser le moyen d'encliquetage. En pratique, cette opération de pression peut être réalisée avec le pied lorsqu'il s'agit de fixer des tubes au sol.

D'une manière avantageuse, le dispositif selon l'invention comprend deux moyens d'encliquetage s'étendant de la face supérieure du support, pour encliqueter deux tubes positionnés parallèlement et côte à côte, les deux moyens d'encliquetage étant de préférence positionnés de part et d'autre du plot de frappe.

D'une manière encore plus avantageuse, le dispositif comprend deux moyens d'encliquetage positionnés d'un côté du plot de frappe, et deux moyens d'encliquetage positionnés de l'autre côté du plot de frappe.

De cette manière, l'artisan peut fixer, avec un seul dispositif, une pluralité de tube, ce qui réduit considérablement le nombre de dispositifs de fixation à utiliser, et le nombre de perçage nécessaire à réaliser dans la paroi, ce qui simplifie donc très nettement l'opération de fixation des tubes.

Selon l'invention, le moyen d'encliquetage présente deux branches élastiques définissant une forme annulaire ouverte, et vers le haut. Le moyen d'encliquetage présente donc une forme en « C » ouverte vers le haut.

Les extrémités des branches élastiques sont recourbées vers l'intérieur pour venir en contact avec le tube, afin de maintenir fermement le tube encliqueté et de s'adapter aux différentes tailles de tube, et permet notamment de recevoir plusieurs diamètres de tubes. Plus précisément, c'est l'extrémité des branches définissant une forme annulaire ouverte vers le haut qui sont recourbées vers l'intérieur pour venir en contact avec le tube. Par extrémité, on entend une portion réduite de la longueur de la branche, d'une longueur inférieure ou égale au tiers de la longueur de la branche elle-même. Par exemple, la portion d'extrémité repliée présente une longueur inférieure à 1 cm, pour une longueur de branche de 3 cm.

Selon une autre caractéristique avantageuse de l'invention, le support plan est arqué en direction de la face inférieure pour venir plaquer la paroi lorsque la cheville est ancrée dans ladite paroi.

Les moyens d'encliquetage positionnés sur le support plan sont suffisamment écartés du plot de frappe pour ne pas gêner la frappe d'un marteau. De préférence, et éventuellement en alternative, la hauteur du plot de frappe dépasse celle du ou des moyens d'encliquetage.

De préférence, afin de répartir d'une manière optimale les efforts de frappe, le plot de frappe présente une forme tronconique s'évasant en direction de la face supérieure du support.

Afin d'augmenter la rigidité du plot, celui-ci présente par exemple des nervures longitudinales définissant une forme générale cruciforme.

### Brève description des figures

D'autres caractéristiques et avantages de l'invention ressortiront clairement de la description qui en est faite ci-après, à titre indicatif et nullement limitatif, en référence aux dessins annexés, dans lesquels :

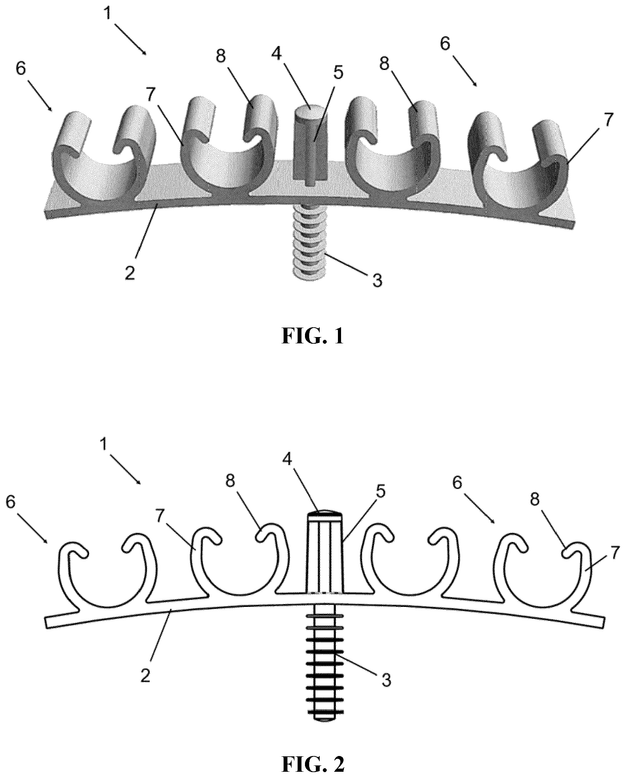

[Fig 1] La figure 1 est une vue en perspective du dispositif de fixation selon l'invention, comprenant quatre moyens d'encliquetage de tubes ;
[Fig 2] La figure 2 est une représentation schématique similaire à celle de la figure 1, vue en plan.

### Description détaillée de l'invention

L'invention concerne un dispositif (1) de fixation d'au moins un tube (non représenté), et de préférence de deux ou quatre tubes, voire plus, contre une paroi (non représentée), tel qu'un sol, un mur ou un plafond.

Sans que cela soit limitatif, le dispositif (1) selon l'invention trouve une application avantageuse pour la fixation de tubes connus sous l'acronyme « PER » pour Polyéthylène Réticulé haute densité, utilisés par exemple en plomberie pour l'alimentation en eau chaude ou froide. L'invention permet également la fixation de tubes dits multicouches, également utilisés en plomberie, ou des tubes connus sous l'acronyme « IRL » pour Isolant Rigide Lisse, ou « IRO » pour Isolant Rigide Ordinaire, utilisés dans les installations électriques pour faire passer câbles et fils électriques.

Bien entendu, l'invention permet de fixer tout type de tube ou gaine, peu importe leur application.

Le dispositif (1) selon l'invention peut également être fixé au sol, et ensuite recouvert d'un matériau coulé, tel que du béton.

Le dispositif (1) de fixation comprend un support plan (2), formant une base et présentant par exemple une forme de bande de matière plastique, d'épaisseur inférieure à 5 mm, et de préférence égale à 3 mm.

Le support plan (2), de forme générale parallélépipédique, s'étend longitudinalement et définit une face supérieure, et face inférieure destinée à être en contact avec la paroi.

Afin de se fixer dans une paroi, notamment dans un orifice ménagé dans ladite paroi, le dispositif (1) comprend une cheville d'ancrage (3) s'étendant orthogonalement de la face inférieure du support (2). De préférence, la cheville (3) s'étend de la face inférieure du support (2) en étant positionnée au centre dudit support (2).

La cheville d'ancrage (3) est de tout type approprié, par exemple filetée, ou bien présente des collerettes annulaires ou tous moyens appropriés pour s'ancrer dans une paroi.

La cheville d'ancrage (3) se fixe directement dans la paroi, et ne reçoit pas de vis en insertion.

A cet effet, le dispositif (1) comprend un plot (4) de frappe s'étendant orthogonalement de la face supérieure du support (2), de manière opposée à la cheville (3), et en alignement avec la cheville (3).

Le plot (4) de frappe, aligné à la cheville (3), permet de pouvoir venir ancrer la cheville (3) dans la paroi en frappant le plot (4) au moyen d'un marteau par exemple.

Pour bien répartir les efforts de frappe, le plot (4) présente une forme tronconique s'évasant en direction de la face supérieure du support (2), et présente de préférence des nervures (5) longitudinales réparties autour du plot (4) pour définir une forme générale cruciforme, participant à la rigidité du plot (4).

Selon une autre caractéristique de l'invention, le support plan (2) est arqué en direction de la face inférieure pour que ledit support (2) vienne plaquer la paroi de manière optimale lorsque la cheville (3) est ancrée dans la paroi.

Afin de permettre la fixation d'un ou plusieurs tubes, le dispositif (1) comprend au moins un, et de préférence plusieurs moyens d'encliquetage (6) de tubes, s'étendant de la face supérieure du support (2). Les moyens d'encliquetage (6) sont ouverts selon une orientation permettant l'encliquetage et le désencliquetage des tubes après ancrage de la cheville (3) dans la paroi.

Dans la forme de réalisation illustrée, deux moyens d'encliquetage (6) sont positionnés d'un côté du plot (4) de frappe, et deux moyens d'encliquetage (6) sont positionnés de l'autre côté du plot (4) de frappe.

De cette manière, le dispositif (1) selon l'invention permet de fixer au moins un, et de préférence quatre tubes contre une paroi, d'une manière simple et efficace, sans utiliser de vis de fixation. Le dispositif (1) est fixé contre la paroi et les tubes sont ensuite encliquetés de façon simple et rapide pour être fixés contre la paroi.

De préférence, et pour assurer une stabilité optimale du dispositif (1) de fixation, les moyens d'encliquetage (6) sont positionnés, symétriquement, de part et d'autre du plot (4) de frappe.

Selon une autre caractéristique, afin de faciliter la frappe du plot (4), la hauteur du plot (4) dépasse celle des moyens d'encliquetage (6).

Dans une forme de réalisation préférée, illustrée aux figures, les moyens d'encliquetage (6) présentent chacun deux branches élastiques (7) définissant une forme annulaire ouverte, notamment vers le haut, pour recevoir en insertion les tubes à fixer.

Par ailleurs, afin de maintenir fermement le tube encliqueté, et de s'adapter aux différentes tailles de tubes, les extrémités (8) des branches élastiques (7) sont recourbées vers l'intérieur.

Par exemple, la forme annulaire définie par les branches élastiques (7) peut présenter un diamètre de 20 mm pour s'adapter, avec l'extrémité (8) recourbée des branches élastiques (7), à des tubes présentant un diamètre compris entre 16 et 20 mm. Dans une autre application, le diamètre de la forme annulaire est par exemple de 28 mm, pour s'adapter à des tubes dont le diamètre serait compris entre 25 et 28 mm.

Bien entendu, les diamètres ne sont aucunement limitatifs, l'artisan saura adapter les moyens d'encliquetage (6) aux tubes qu'il entend fixer.

Ainsi, selon l'invention, pour fixer par exemple quatre tubes au sol, il convient de fixer préalablement plusieurs dispositifs (1) de fixation au sol, par exemple un tous les 80 à 100 cm. Ensuite, pour fixer les tubes, l'artisan peut par exemple tenir un tube enroulé sur son épaule, qu'il déroule au fur et à mesure et fixe avec le pied à l'intérieur du moyen d'encliquetage (6). Par conséquent, avec le dispositif (1) selon l'invention, l'artisan coupe le tube à la longueur nécessaire, sans perte de matière. L'opération de pose et de fixation des tubes est donc rapide et très nettement simplifiée, et économise des longueurs de tubes et diminue le nombre de perçage de la paroi à réaliser.

## Revendications

1. Dispositif (1) de fixation d'au moins un tube contre une paroi, le dispositif (1) comprend :
- un support plan (2) ;
- une cheville d'ancrage (3) dans la paroi, s'étendant orthogonalement d'une face inférieure du support (2) ;
- un plot (4) de frappe s'étendant orthogonalement d'une face supérieure du support (2), en alignement avec la cheville (3) ;
- au moins un moyen d'encliquetage (6) d'un tube, le moyen d'encliquetage (6) s'étendant de la face supérieure du support (2) et présentant deux branches élastiques (7) définissant une forme annulaire ouverte vers le haut permettant l'encliquetage et le désencliquetage du tube après ancrage de la cheville (3) dans la paroi ;
**caractérisé en ce que** les extrémités (8) des branches élastiques (7) sont recourbées vers l'intérieur pour venir en contact avec le tube afin de maintenir fermement le tube encliqueté, et de s'adapter aux différentes tailles de tubes.

2. Dispositif (1) selon la revendication 1, ***caractérisé* en ce que** deux moyens d'encliquetage (6) s'étendent de la face supérieure du support (2), pour encliqueter deux tubes positionnés parallèlement et côte à côte.

3. Dispositif (1) selon la revendication 2, ***caractérisé* en ce que** les deux moyens d'encliquetage (6) sont positionnés de part et d'autre du plot (4) de frappe.

4. Dispositif (1) selon l'une des revendications précédentes, ***caractérisé* en ce que** le support plan (2) est arqué en direction de la face inférieure pour venir plaquer la paroi lorsque la cheville (3) est ancrée dans ladite paroi.

5. Dispositif (1) selon l'une des revendications précédentes, ***caractérisé* en ce que** le plot (4) de frappe présente une forme tronconique s'évasant en direction de la face supérieure du support (2).

6. Dispositif (1) selon l'une des revendications précédentes, ***caractérisé* en ce que** le plot (4) de frappe présente des nervures (5) longitudinales définissant une forme générale cruciforme.

7. Dispositif (1) selon l'une des revendications précédentes, ***caractérisé* en ce que** la hauteur du plot (4) de frappe dépasse celle du moyen d'encliquetage (6).

8. Dispositif (1) selon l'une des revendications précédentes, ***caractérisé* en ce que** deux moyens d'encliquetage (6) sont positionnés d'un côté du plot (4) de frappe, et deux moyens d'encliquetage (6) sont positionnés de l'autre côté du plot (4) de frappe.

## Patentansprüche

1. Vorrichtung (1) zum Befestigen mindestens eines Rohres an einer Wand, wobei die Vorrichtung (1) umfasst:
- einen flachen Träger (2);
- einen Wandanker (3), der sich orthogonal von einer Unterseite des Trägers (2) aus erstreckt; und
- einen Schlagbolzen (4), der sich orthogonal von einer Oberseite des Trägers (2) aus erstreckt und mit dem Wandanker (3) ausgerichtet ist;
- mindestens ein Mittel (6) zum Einschnappen eines Rohrs, wobei sich das Einschnappmittel (6) von der Oberseite des Trägers (2) aus erstreckt und zwei elastische Schenkel (7) aufweist, die eine nach oben offener Ringform definieren, die es ermöglicht, das Rohr nach der Verankerung des Wandankers (3) in der Wand ein- und auszurasten **dadurch gekennzeichnet, dass** die Enden (8) der elastischen Schenkel (7) nach innen gebogen sind, um mit dem Rohr in Kontakt zu kommen, um das eingeschnappte Rohr festzuhalten und sich an die verschiedenen Größen von Rohren anzupassen

2. Vorrichtung (1) nach Anspruch 1, **dadurch gekennzeichnet, dass** sich zwei Schnappmittel (6) von der Oberseite des Trägers (2) erstrecken, um zwei parallel und nebeneinander liegende Rohre einzurasten.

3. Vorrichtung (1) nach Anspruch 2, **dadurch gekennzeichnet, dass** die beiden Schnappmittel (6) auf beiden Seiten des Schlagbolzens (4) angeordnet sind.

4. Vorrichtung (1) nach einem der vorhergehenden Ansprüche, **dadurch gekennzeichnet, dass** der flache Träger (2) zur Unterseite hin gebogen ist, um gegen die Wand zu drücken, wenn der Wandanker (3) in der Wand verankert ist.

5. Vorrichtung (1) nach einem der vorhergehenden Ansprüche, **dadurch gekennzeichnet, dass** der Schlagbolzen (4) eine kegelstumpfförmige, sich zur Oberseite des Trägers (2) hin erweiternde Form aufweist.

6. Vorrichtung (1) nach einem der vorhergehenden Ansprüche, **dadurch gekennzeichnet, daß** der Schlagbolzen (4) Längsrippen (5) aufweist, die eine allgemein kreuzförmige Form definieren.

7. Vorrichtung (1) nach einem der vorangehenden Ansprüche, **dadurch gekennzeichnet, dass** die Höhe des Schlagbolzens (4) die des Schnappmittels (6) übersteigt.

8. Vorrichtung (1) nach einem der vorangehenden Ansprüche, **dadurch gekennzeichnet, daß** zwei Schnappmittel (6) auf einer Seite des Schlagbolzens (4) und zwei Schnappmittel (6) auf der anderen Seite des Schlagbolzens (4) angeordnet sind.

## Claims

1. A device (1) for fixing at least one tube against a wall, the device (1) comprises:
- a flat support (2) ;
- a wall anchor (3), extending orthogonally from a lower face of the support (2); and
- a striking pin (4) extending orthogonally from an upper face of the support (2), in alignment with the wall anchor (3);
- at least one means (6) for snapping in a tube, the snapping-in means (6) extending from the upper face of the support (2) and having two elastic branches (7) defining an upwardly open annular shape allowing the tube to be snapped in and out of place after the wall anchor (3) has been anchored in the wall;
**characterized in that** the ends (8) of the elastic branches (7) are bent inwards to come into contact with the tube in order to hold the snapped-in tube firmly, and to adapt to the different sizes of tubes

2. Device (1) according to claim 1, **characterized in that** two snap means (6) extend from the upper side of the support (2), for snapping in two tubes positioned parallel and side by side.

3. Device (1) according to claim 2, **characterized in that** the two snap means (6) are positioned on either side of the striking pin (4).

4. Device (1) according to one of the preceding claims, **characterized in that** the flat support (2) is arched towards the lower face to come to press against the wall when the wall anchor (3) is anchored in said wall.

5. Device (1) according to one of the preceding claims, **characterized in that** the striking pin (4) has a truncated conical shape flaring out towards the upper face of the support (2).

6. Device (1) according to one of the preceding claims, **characterized in that** the striking pin (4) has longitudinal ribs (5) defining a generally cruciform shape.

7. Device (1) according to any of the preceding claims, **characterized in that** the height of the striking pin (4) exceeds that of the snap means (6).

8. Device (1) according to any of the preceding claims, **characterized in that** two snap means (6) are positioned on one side of the striking pin (4), and two snap means (6) are positioned on the other side of the striking pin (4.
